(19) Europäisches Patentamt
European Patent Office
Office européen des brevets

(11) Veröffentlichungsnummer: **0 118 759 B1**

# (12) EUROPÄISCHE PATENTSCHRIFT

(45) Veröffentlichungstag der Patentschrift: **29.05.91**

(51) Int. Cl.5: **A01N 25/04**, A01N 25/30

(21) Anmeldenummer: **84101281.8**

(22) Anmeldetag: **08.02.84**

## (54) Feindisperse flüssige Pflanzenschutzmittel.

(30) Priorität: **11.02.83 DE 3304677**
**23.12.83 DE 3346637**

(43) Veröffentlichungstag der Anmeldung:
**19.09.84 Patentblatt 84/38**

(45) Bekanntmachung des Hinweises auf die Patenterteilung:
**29.05.91 Patentblatt 91/22**

(84) Benannte Vertragsstaaten:
**AT BE CH DE FR GB IT LI NL**

(56) Entgegenhaltungen:
**AT-A- 368 836**
**DE-A- 1 959 478**
**US-A- 3 658 959**

**CENTRAL PATENTS INDEX, BASIC ABSTACTS JOURNAL, Sektion C, Woche E39, 24. November 1982, Nr. 82118E/39, Derwent Publications Ltd., London, GB; & JP - A - 57 134 404 (NIHON NOYAKU K.K.) 19.08.1982**

(73) Patentinhaber: **HOECHST AKTIENGESELLSCHAFT**
**Postfach 80 03 20**
**W-6230 Frankfurt am Main 80(DE)**

(72) Erfinder: **Heinrich, Rudolf, Dr.**
**Taunusstrasse 19**
**W-6233 Kelkheim (Taunus)(DE)**
Erfinder: **Albrecht, Konrad, Dr.**
**Sodener Strasse 64**
**W-6233 Kelkheim (Taunus)(DE)**
Erfinder: **Schumacher, Hans, Dr.**
**Claudiusstrasse 4**
**W-6093 Flörsheim am Main(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Gegenstand der Erfindung sind wäßrige, anwendungstechnisch stabile Emulsions konzentrate, welche den Wirkstoff in flüssiger Form enthalten, weitgehend frei von störenden anorganischen Salzen sind und in der erfindungsgemäß beschriebenen Form oder in Mischung mit anderen feindispersen, flüssigen Zubereitungen nach Belieben mit Wasser verdünnbar sind.

Es ist bekannt, pestizide Wirkstoffe in organischen Lösungsmitteln, vorwiegend Aromaten, mit Emulgatoren zu sogenannten emulgierbaren Konzentraten (EC) zuzubereiten. Es ist auch bekannt, wasserlösliche pestizide Wirkstoffe in wäßrigem Medium mit Emulgatoren und gegebenenfalls noch anderen Formulierungshilfsstoffen zuzubereiten.

Es ist ferner bekannt und in der DE-OS 2805251 beschrieben, pestizide und insbesondere herbizide Wirkstoffe aus der Gruppe der 2,6-Dinitroanilinderivate in Form von wäßrigen Emulsionen zuzubereiten, welche 10 bis 75 Gew.-% eines Herbizids, 0 bis 60 Gew.-% eines im wesentlichen mit Wasser nicht mischbaren Lösungsmittels, 0,5 bis 10 Gew.-% eines Emulgators und 15 bis 70 Gew.-% einer 15 %igen wäßrigen Lösung eines anorganischen Salzes enthalten.

Der Zusatz der genannten Mengen anorganischer Salze kann jedoch in der Praxis zu Störungen durch Korrosion führen, oder zu Flockungserscheinungen, wenn diese Formulierungen mit anderen pestiziden Zubereitungen kombiniert werden und dabei mit nur geringen Wasseraufwandmengen gearbeitet werden muß.

Es ist ferner bekannt und in der Europäischen Patentanmeldung Nr. 47 396 beschrieben, lagerstabile konzentrierte Emulsionen von herbizid-wirkenden Phenoxyalkancarbonsäureestern auf wäßriger Basis unter Verwendung esterlöslicher Emulgatoren und wasserlöslicher Dispergatoren herzustellen. Als esterlösliche Emulgatoren dienen, gegebenenfalls in Mischung mit Alkylarylsulfonaten Fettsäurepolyethylenglykolester, Polyethylenglykolether von Fettalkoholen, von Glyzeriden oder von Alkylphenolen sowie Polyoxyethylen- und Polyoxypropylenblockpolymere. Als Dispergatoren dienen phosphatierte Alkylarylpolyethylenoxide, die Ammonium-, Natrium- oder Kaliumsalze von phosphoryliertem Polystyrylphenyl-polyethylenoxid oder Ethylenoxid-Kondensate von Fettaminen enthalten.

Die Mengen der zugesetzten öllöslichen Emulgatoren liegen zwischen 1,01 und 11,1 Gew.-Tl. pro 100 Gew.-Tl. Phenoxyalkancarbonsäureester. Die Mengen an Dispergatoren betragen 0,5 bis 5 Gew.-Tl. pro 100 Gew.-Tl. wäßriger Lösung. Zur Vermeidung der dabei auftretenden Schaumbildung werden Antischaummittel auf Basis langkettiger Alkohole und Silikone zugesetzt.

Versuche, die Verwendung der oben aufgeführten wasserlöslichen Ammonium-, Natrium- oder Kaliumsalze der phosphorylierten Alkylarylpolyethylenoxide auf andere als in der Europäischen Patentanmeldung Nr. 47396 erwähnten Wirkstoffe auszudehnen, führten zu erheblichen anwendungstechnischen Problemen. Bei Lagerversuchen über 3 Monate bei 50 °C traten bei einer Reihe von Zubereitungen Entmischungserscheinungen auf, die nur bedingt reversibel waren.

Ähnliche Ergebnisse wurden mit den in der Europäischen Patentanmeldung Nr. 33291 für die Herstellung von konzentrierten Öl-in-Wasser-Emulsionen verwendeten Salzen von phosphorylierten Polystyrylphenylpolyäthylenoxiden (^R^Soprophor FL) erhalten, ebenso mit den in der DE-OS 3111 934 erwähnten Alkylarylpolyglykoläther-Verbindungen, die auch in Kombination mit Alkylarylsulfonsäuresalzen nur bedingt wärmestabile kolloidale Emulsionen lieferten.

Die in der DE-OS 3009 944 für die Formulierung insektizider Phosphorester verwendeten Dispergiermittel Polyvinylalkohol und Gummi arabicum führten bereits bei leichten pH-Schwankungen während der Lagerung bei 50 °C zu deutlichen Entmischungserscheinungen bzw. zur Phasentrennung. Elektrolyt-Zusatz, wie er bei Verwendung von Puffergemischen oder zur Verbesserung der Kältestabilität üblich ist, verursachte Koagulationen und Fällungserscheinungen.

Die Europäische Patentanmeldung Nr. 28052 beschreibt ein Verfahren zur Herstellung wäßriger fließfähiger Konzentrate des Herbizids Napropamide (N,N-Diethyl-2-(1-naphthyloxy)propionamide) mit Hilfe von Clays, nichtionischen Emulgatoren, Dispergiermitteln auf der Basis von Ligninsulfonat und Gefrierschutzmitteln. Dieses Verfahren hat jedoch den Nachteil starker Viskositätsschwankungen in Abhängigkeit von den Lager- und Gebrauchstemperaturen. Bei erhöhten Temperaturen kann die verringerte Viskosität zu Sedimentationserscheinungen und Phasentrennung führen.

Darüberhinaus sind weitere Verfahren bekannt, die ähnlich wie in den Europäischen Patentanmeldungen Nr. 17001, Nr. 29626 oder Nr. 52313 die Formulierungsbestandteile in einer Trockenmühle vorzerkleinern und/oder in einer Naßmühle auf die gewünschte endgültige Partikelgröße bringen. Diese Verfahren aber bedeuten zusätzliche kostenintensive Mahlvorgänge mit allen Dispersionen anhaftenden Nachteilen.

Der vorliegenden Erfindung lag somit die Aufgabe zugrunde, die Nachteile der bisher bekannten, Lösungsmittel, anorganische Salze oder Verdickungsmittel mineralischen Ursprungs enthalten Pestizidfomulierungen zu überwinden. Hierbei stellte sich insbesondere das Problem, konzentrierte, feindisperse flüssige, auch bei -10 °C stabile Pestizidformulierungen zu schaffen, die den Wirkstoff in flüssiger Form enthalten, vollständig oder weitgehend frei von organischen Lösungmitteln sind, keine störenden anorganischen Salze enthalten, ferner gegen Hydrolyse beständig sind und alleine oder in Mischung mit anderen feindispersen flüssigen Zubereitungen nach Belieben mit Wasser verdünnbar sind.

Aus AT-A-368836 sind konzentrierte wasserhaltige Emulsionen von herbiziden Phenoxyalkancarbonsäureestern bekannt, die eine Kombination aus einem öllöslichen, d.h. im Ester löslichen Emulgator und einen wasserlöslichen Dispergator enthalten. Bevorzugt sind dabei Fettsäurepolyethylenglykolester oder Blockpolymere aus Ethylen und Propylenoxid und Alkylarylsulfonate als Emulgatoren in Kombination mit phosphatierten Alkylarylpolyethylenoxiden als Disperatoren. Als mögliche Dispergatoren werden dabei allgemein auch Salze von phosphorylierten Alkyl-polyethylen-polypropylenoxid-Blockpolymeren erwähnt.

Aus US-A-3,658,959 ist bekannt, zur Stabilisierung von Herbiziden aus der Gruppe der Carbamat-Wirkstoffe Ester aus polybasischen Säuren und Ethylenoxid-Propylenoxid-Ethylenoxid-Blockpolymeren einzusetzen, wobei die eingesetzen Ester noch freie Säuregruppen enthalten. Man kann damit die Neigung der Carbamate zur chemischen Zersetzung als auch zur Ausfällung in deren Formulierungen, verringern.

Aus JP-A-57134404 sind nicht-wäßrige Emulsionen oder Emulsionskonzentrate auf Lösungsmittelbasis bekannt, die organische Phosphate als Wirkstoffe und phosphorylierte Polyalkylenglykole, Polyalkylenglykolether oder Blockpolymere aus Ethylenoxid und Propylenoxid als Mittel zur Verhinderung von Ausfällungen der Phosphate enthalten.

Aus DE-A-1959478 sind homogene wäßrige-organische Lösungen bekannt, die als Lösungvermittler für organische Substanzen Phosphorsäureester von oxalkylierten Fettalkoholen enthalten.

Es wurde nun überraschenderweise gefunden, daß bestimmte, in Wasser und organischen Lösungsmitteln lösliche Netz- und Dispergiermittel im Vergleich zu den in der Europäischen Patentanmeldung Nr. 47396 beschriebenen wasserlöslichen Dispergatoren vom Typ der phosphorylierten Alkylarylpolyäthylenoxide effektiver und wesentlich vorteilhafter einsetzbar sind, wenn man konzentrierte wäßrig-organische Emulsionen von Pflanzenschutzmitteln herstellen will.

So wurde gefunden, daß Salze von bestimmten phosphorylierten Block-Copolymerisaten auf Basis von Propylenoxid und Ethylenoxid im Gegensatz zu den Dispergatoren der genannten europäischen Patentanmeldung anwendungstechnisch stabile Zubereitungen mit den obengenannten vorteilhaften Eigenschaften ergeben.

Diese Zubereitungen sind weitgehend frei von anorganischen Salzen und sind darüberhinaus auch für andere Pestizide verwendbar. Durch Variation des Polyäthylenglykol-Anteils läßt sich die gewünschte Viskosität der fertigen Zubereitung problemlos einstellen, so daß dabei auf die sonst üblichen Dispergier- und Verdünnungsmittel mineralischen Ursprungs verzichtet werden kann.

Das erfindunsgemäße Verfahren eignet sich sowohl für die gemäß DE-OS Nr. 2805 251 formulierten 2,6-Dinitroanilin-Derivate als auch für die gemäß Europäischer Patentanmeldung Nr. 47396 zubereiteten herbiziden Phenoxyalkancarbonsäureester. Ebenso können nach dem vorliegenden Verfahren anwendungstechnisch stabile Formulierungen von Fungiziden, aber auch von Insektiziden, von Akariziden und Nematiziden oder auch von Pheromonen (Insektenlockstoffen) sowie von sogenannten Repellents (Insektenabwehrstoffe) erhalten werden. Darüberhinaus könnenauch Wirkstoffe, die im Hygienesektor Verwendung finden, wie Desinfektionsmittel, nach dem erfindungsgemäßen Verfahren formuliert werden.

Gegenstand der vorliegenden Erfindung sind Pflanzenschutzmittel in Form von wäßrigen Emulsionskonzentraten, die einen oder mehrere flüssige oder gelöste Wirkstoffe enthalten, dadurch gekennzeichnet, daß sie neben Wirkstoff 10-70 Gew.-% Wasser und als öl- und wasserlösliche Dispergiermittel 0,5-20 Gew.-% Salze von phosphorylierten Block-Copolymerisaten auf der Basis von Propylenoxid und Ethylenoxid der Formel I oder II

$$[H(\underset{\displaystyle CH_3}{\underset{|}{CH}}-CH_2-O)_p-(CH_2-CH_2-O)_q]_n-\overset{\displaystyle O}{\overset{\|}{P}}(OM)_m \qquad (I)$$

$$[H(CH_2-CH_2-O)_r-(\underset{\displaystyle CH_3}{\underset{|}{CH}}-CH_2-O)_s-(CH_2-CH_2-O)_t]_n-\overset{\displaystyle O}{\overset{\|}{P}}(OM)_m \qquad (II)$$

worin

| | |
|---|---|
| p, r und s | unabhängig voneinander eine Zahl zwischen 20 und 300, |
| q und t | unabhängig voneinander eine Zahl zwischen 10 und 300, |
| n und m | unabhängig voneinander 1 oder 2, wobei die Summe n + m 3 sein muß, und |
| M | ein Alkalimetallkation, ein Äquivalent eines Erdalkalimetallkations, Ammonium, Mono-, Di- oder Trialkylammonium oder Mono-, Di- oder Trialkanolammonium |

bedeuten, enthalten.

Zusätzlich können diese wäßrigen Emulsionen weitere übliche Dispergiermittel, Emulgatoren, Verdikkungsmittel, Di- oder Polyole als Antigefriermittel und - insbesondere für feste Wirkstoffe - organische Lösungsmittel enthalten.

Es können die formelmäßig angegebenen Salze der Blockpolymerisate einzeln oder im Gemisch eingesetzt werden.

Bevorzugt bedeutet in Formel (I) p eine Zahl zwischen 50 und 200 und q eine Zahl zwischen 30 und 200. In Formel (II) bedeutet r bevorzugt eine Zahl zwischen 30 und 200, s eine Zahl zwischen 50 und 200 und t eine Zahl zwischen 30 und 200.

Unter den obenangegebenen Blockpolymerisaten eigenen sich die Polymerisate der Formel (II) in besonderem Maße.

Geeignete als Antigefriermittel einsetzbare Di- oder Polyole sind ($C_2$-$C_5$)-Alkandiole, insbesondere Ethylenglykol, Butandiol, ($C_3$-$C_5$)-Alkantriole, insbesondere Glycerin sowie Polyethylenglykole unterschiedlichen Molekulargewichtes und Alkylglykole, insbesondere ($C_1$-$C_4$)-Alkylglykole.

Entscheidend beim Einsatz fester Wirkstoffe ist eine mäßig bis sehr gute Löslichkeit der Wirkstoffe in den verwendeten organischen Lösungsmitteln. In Wasser sollten die Wirkstoffe nicht oder nur in geringem Maße löslich sein.

Geeignete Wirkstoffe sind beispielsweise die Herbizide

a) $\alpha$-4-(2', 4'-dichlorphenoxy)-phenoxy-propionsäuremethylester [common name: Illoxan]
b) Äthyl-2-[4-(6-chlor-2-benthiazolyl-oxy)phenoxy]-propionat,
c) Äthyl-2-[4-(6-chlor-2-benzoxazoyl-oxy)-phenoxy]-propionat,
d) 2,6-Dinitro-4-trifluormethyl-N,N-dipropylanilin [common name: Trifluralin]
e) 2,6-Dinitro-4-isopropyl-N,N-dipropylanilin [common name: Isopropalin]
f) 2,6-Dibrom-4-hydroxy-benzonitril-octanoat,
g) 2-sec.butyl-4,6-dinitrophenol [common name: Dinoterb]

die Insektizide
1,4,5,6,7,7-hexachlor-8,9,10-trinorborn-5-en-2,3-ylendimethylsulfit [common name: Endosulfan]
2-(1-methyl-n-propyl)-4,6-dinitro-phenyl-2-methylcrotonat [common name: Binaparcryl]
die Pheromone
(E)-8-(E)-10-Dodecadienol
(Z)-7,8-Epoxy-2-methyl-octadecan,
und das Repellent

a) Phthalsäuredimethylester

Die Herbizide a), d), e), f), g), die obengenannten Insektizide sowie das Repellent sind aus H. Martin, Pesticide Manual 6th edition 1979 bekannt. Die Herbizide b), c) sind in DE-OS 2 640 730, die beiden Pheromone in M. Beroza, Chem. Controlling Insect Behaviour, Academic Press, N.Y. 1970 beschrieben.

Gegebenenfalls einzusetzende übliche Dispergiermittel sind vorzugsweise Lignosulfonate, Na-Salze von Dinaphthylmethan-Disulfonsäuren, das Na-Salz einer Sulfonsäure aus Kresol, Formaldehyd, Na-Sulfit und Oxynaphthalinsulfonsäure, das Na-Salz einer Sulfonsäure aus m-Kresol, Formaldehyd und Na-Sulfit, Kondensationsprodukte aus Arylsulfonsäuren und Formaldehyd-Na-Salz, Triäthanolaminsalze von phosphorylierten Polystyrylphenylpolyäthylenoxiden, Polyvinylalkohol, Dodecylbenzolsulfonsaures Calcium sowie Alkylnaphthalinsulfonate unterschiedlicher Alkylkettenlänge.

Geeignete Emulgatoren sind nichtionische, anionische oder kationische oberflächenaktive Stoffe, wobei vorwiegend Mischungen von nichtionischen mit anionischen Komponenten verwendet werden. Verwendbar sind aber auch Kombinationen aus nichtionischen und kationischen oberflächenaktiven Mitteln. Zu den bevorzugt eingesetzten Emulgatoren gehören Phenylsulfonat-Calcium, ethoxylierte Nonylphenole, ethoxylierte aliphatische Alkohole, ethoxyliertes Rizinusöl, Propylenglykol-Ethylenglykol-Blockpolymerisate sowie Gemische derselben.

Als Verdickungsmittel können wasserlösliche Polymere, wie z.B. Polyvinylalkohol, Polyvinylpyrrolidon und Cellulose-Derivate verwendet werden.

Als organische Lösungsmittel eignen sich alle mit Wasser nicht mischbaren Lösungsmittel z.B. Aromaten wie Toluol, Xylole, 1/2 Methylnaphthalin, Dimethylnaphthaline, Aliphaten wie Paraffinöle, pflanzliche Öle, Alicyclen wie Cyclohexan, Alkanole wie Cyclohexanol, i-Octylalkohol, Ether wie Diethylether, Ketone wie Cyclohexanon, 4-Methylcyclohexanon, Isophoron, Ester wie Essigsäureethylester und Tri-n-butylphosphat.

Die erfindungsgemäßen Pflanzenschutzmittel enthalten insbesondere 5-60 Gew.-% Wirkstoff, 10-70 Gew.-% Wasser. 0.5-20 Gew.-% phosporylierte Blockpolymerisate, 0 bis 50 Gew.-% Di- oder Polyol, 0-10 Gew.-% eines üblichen Dispergiermittels, 0-15 Gew.-% Emulgatoren, 0-10 Gew.-% Verdickungsmittel und 0 bis 30 Gew.-% organisches Lösungsmittel.

Gegenstand der Erfindung ist ferner ein Verfahren zur Herstellung der erfindungsgemäßen Pflanzenschutzmittel, dadurch gekennzeichnet, daß die obengenannten Komponenten in den erforderlichen Mengen bei Temperaturen zwischen 0° und 60° C, zweckmäßigerweise aber bei Raumtemperatur in einer Zone hoher Turbulenz gerührt oder auch geschüttelt werden, bis sich die gewünschte stabile Emulsion gebildet hat, wobei Teilchendurchmesser von vorzugsweise 1-15 um eingestellt werden.

Zur praktischen Durchführung des Verfahrens wird zunächst die wäßrige Phase (Trägerphase) durch Einrühren des Dispergiermittels und gegebenenfalls der Di- oder Polyole in Wasser hergestellt. Danach wird der zu emulgierende Wirkstoff mit dem Emulgator-Anteil versetzt und in der wäßrigen Phase fein dispergiert. Bei Wirkstoffen mit einem Schmelzpunkt von ca. 0° C und darüber kann es erforderlich sein, konzentrierte Lösungen desselben in einem oder mehreren der obengenannten organischen Lösungsmittel herzustellen und diese, nach Zusatz von Emulgatoren und gegebenenfalls Stabilisatoren in der wäßrigen Phase zu dispergieren.

Das Dispergiermittel kann aber auch zuerst dem Wirkstoff zugemischt werden und dann zusammen mit diesen in die wäßrige Phase eindispergiert werden.

Das Dispergieren kann durch einen Rühr- oder gegebenenfalls auch Schüttelvorgang erfolgen und wird zweckmäßigerweise so lange fortgesetzt, bis die organische Phase der gewünschten Tröpfchengröße entspricht. Zu empfehlen ist ein Tröpfchendurchmesser von 1-15 um. Der Dispergiervorgang wird zweckmäßigerweise bei Raumtemperatur durchgeführt, kann aber auch in der Kälte oder bei erhöhten Temperaturen erfolgen.

Das Verfahren eignet sich besonders für solche Wirkstoffe, die sich aufgrund ihres niedrigen Schmelzpunktes nur schlecht oder gar nicht mit Hilfe von Mahlvorrichtungen in eine feindisperse wäßrige Phase überführen lassen oder auch für solche Wirkstoffe, bei denen der Mahlvorgang besondere Sicherheitsvorkehrungen erfordert.

Die Erfindung wird durch die folgenden Beispiele erläutert:

Beispiel 1

36 Gew.-% 2-(4-(2',4'-Dichlorphenoxy)-phenoxy)-propionsäuremethylester wurden unter Rühren in 18 Gew.-% Xylol bei 20-25° C gelöst und mit 8 Gew.-% Fettsäurepolyglykolester (mit 40 EO * ) versetzt. In 24 Gew.-% Wasser wurden ebenfalls bei Raumtemperatur 4 Gew.-% des Kaliumsalzes des phosphorylierten Blockcopolymerisates der obengenannten Formel I (mit n = 1 und einem Anteil von 30 % Polyethylenglykol im Endprodukt) gelöst und danach mit 10 Gew.-% Ethylenglykol versetzt. Zu dieser wäßrigen Phase ließ man unter starkem Rühren mit einem Flügelrührer langsam die obengenannte organische Phase fließen und rührt die entstandene weiße Emulsion noch ca. 15 Minuten nach. Eine Probe wird 3 Monate bei 50° C gelagert. Die Zubereitung war sowohl chemisch als auch anwendungstechnisch stabil.

Beispiel 2

30 Gew.-% Ethyl-2-(4-(6-chlor-2-benzthiazoyloxy)-phenoxy-propanoat wurden unter Rühren bei 40-45° C in 20 Gew.-% Xylol gelöst und mit 6-Gew.-% der Kaliumsalze der phosphorylierten Blockcopolymeren der Formel I (Gemisch der Polymerisate mit n = 1 und n = 2 im Verhältnis 1:1 mit einem Gesamtanteil von 40 % Polyethylenoxid) und 2 Gew.-% des Triäthanolamin-Salzes eines phosphorylierten Polystyrylphenylpolyethylenoxids sowie 4 Gew.-% dodecylbenzolsulfonsaurem Calcium versetzt.

* EO = Ethylenoxid-Einheit

In 29 Gew.-% Wasser wurden bei Raumtemperatur 9 Gew.-% Ethylenglykol gelöst. Zu dieser wäßrigen Lösung ließ man unter starkem Rühren mit einem Flügelrührer die obengenannte organische Phase fließen und rührt die entstandene weiße Emulsion nach ca. 15 Minuten bei Raumtemperatur nach. Eine Probe wurde 3 Monate bei 50 °C gelagert. Die Zubereitung war chemisch und anwendungstechnisch stabil.

Beispiel 3

22,3 Gew.-% Endosulfan techn., wurden unter Rühren in 21 Gew.-% eines Aromaten-Gemisches (Siedebereich 219 °C-282 °C) gelöst und mit 10 Gew.-% des Triethanolamin-Salzes des phosphorylierten Blockcopolymerisates der obengenannten Formel I (mit n = 2 und einem Anteil von 35 % Polyethylenoxid im Endprodukt) gelöst. In 34,7 Gew.-% Wasser wurden bei Raumtemperatur 12 Gew.-% Polyethylenglykol (MG 1000) gelöst. Dazu ließ man unter starkem Rühren langsam die organische Phase fließen und rührte die entstandene beige-farbene Emulsion noch ca. 15-20 Minuten nach.

Die Zubereitung war chemisch und anwendungstechnisch stabil.

Beispiel 4

In 45 Gew.-% Wasser wurden 6,0 Gew.-% ethoxyliertes Nonylphenol (6 AeO), 7 Gew.-% des Kaliumsalzes des phosphorylierten Block-copolymerisates der obengenannten Formel I (mit n = 1 und einem Gesamtanteil von 30 % Ethylenoxid) und 10 Gew.-% Glycerin gelöst. Dazu ließ man unter starkem Rühren 32,0 Gew.-% (E)-8-(E)-10-Dodecadienol fließen. Die dabei entstehende weiße Emulsion wurde noch 15 bis 20 Minuten nachgerührt.

Die Zubereitung war chemisch und anwendungstechnisch stabil.

Beispiel 5

30 Gew.-% 2,6-Dinitro-4-trifluormethyl-N,N-dipropylanilin (Trifluralin) wurden unter Rühren bei 20 - 25 °C in 15 Gew.-% Xylol gelöst und mit 3 Gew.-% eines phosphorylierten Blockcopolymerisats der obengenannten Formel II, wobei ein Gemisch der Polymere mit n = 1 und n = 2 im Verhältnis 1:1 eingesetzt wurde, bei denen x = 40 - 60, y = 69 - 90 und z = 30 - 60 bedeuten, sowie 10 Gew.-% Fettsäurepolyglykolester (36 EO) versetzt. In 38 Gew.-% Wasser wurden bei Raumtemperatur 10 Gew.-% Polyethylenglykol (Mol.Gew. 500) gelöst. Zu dieser wäßrigen Lösung ließ man unter starkem Rühren langsam die organische Phase fließen und rührte die entstandene gelbe Emulsion noch ca. 20 - 25 Minuten nach, bis sich der hellgelbe Farbton der Emulsion nicht mehr veränderte Die Zubereitung war auch nach Lagerung bei verschiedenen Temperaturen anwendungstechnisch und chemisch stabil.

Beispiel 6

20 Gew.-% Ethyl-2-(4-(6-chlor-2-benzthiazolyloxy)-phenoxy-propanoat wurden unter Rühren bei 40 - 45 °C in 25 Gew.-% Xylol gelöst und mit 6 Gew.-% der Kaliumsalze der phosphorylierten Blockcopolymeren der Formel (II) von Beispiel 5 und 2 Gew.-% des Triethanolamin-Salzes eines phosphorylierten Polystyrylphenyl-polyethylen-oxids sowie 4 Gew.-% dodecylbenzolsulfonsaurem Calcium versetzt.

In 33 Gew.-% Wasser wurden bei Raumtemperatur 10 Gew.-% Ethylenglykol gelöst. Zu dieser wäßrigen Lösung ließ man unter starkem Rühren mit einem Flügelrührer die obengenannte organische Phase fließen und rührte die entstandene weiße Emulsion noch ca. 15 Min. bei Raumtemperatur nach. Eine Probe wurde 3 Monate bei 50 °C gelagert. Die Zubereitung war chemisch und anwendungstechnisch stabil.

Beispiel 7

36 Gew.-% 2-(4-(2'4'-Dichlorphenoxy)-phenoxy)-propionsäuremethylester wurden unter Rühren in 18 Gew.-% Xylol bei 20 - 25 °C gelöst und mit 6 Gew.-% Fettsäurepolyglykolester (mit 40 EO) versetzt. In 24 Gew.-% Wasser wurden ebenfalls bei Raumtemperatur 6 Gew.-% des Kaliumsalzes des phosphorylierten Blockcopolymerisates der Formel II, worin n = 1, r = 100 - 130, s = 190 - 220 und t = 60 - 90 bedeuten,

gelöst und danach mit 10 Gew.-% Ethylenglykol versetzt. Zu dieser wäßrigen Phase ließ man unter starkem Rühren mit einem Flügelrührer langsam die obengenannte organische Phase fließen und rührte die entstandene weiße Emulsion noch ca. 15 Minuten nach. Eine Probe wurde 3 Monate bei 50 °C gelagert. Die Zubereitung war sowohl chemisch als auch anwendungstechnisch stabil.

Beispiel 8

22,3 Gew.-% Endosulfan, techn., wurden unter Rühren in 21 Gew.-% eines Aromaten-Gemisches (Siedebereich 219 °C - 282 °C) gelöst und mit 10 Gew.-% des Triethanolamin-Salzesdes phosphorylierten Blockcopolymerisates der obengenannten Formel (II), worin n = 2, r = 100 - 120, s = 190 - 220 220 und t = 60 - 90 bedeuteten, gelöst. In 36,7 Gew.-% Wasser wurden bei Raumtemperatur 10 Gew.-% Polyethylenglykol (MG 1000) gelöst. Dazu ließ man unter starkem Rühren langsam die organische Phase fließen und rührte die entstandene beige-farbene Emulsion noch ca. 15 - 20 Minuten nach. Die Zubereitung war chemisch und anwendungstechnisch stabil.

Beispiel 9

40,4 Gew.-% Phthalsäuredimethylester wurden mit 6,2 Gew.-% des Triethanolaminsalzes des phosphorylierten Blockcopolymerisates der Formel (II) von Beispiel 5 gemischt.

In 39,0 Gew.-Wasser wurden 8 Gew.-% Harnstoff und 3,4 Gew.-% des Kaliumsalzes eines phosphorylierten Polystyrylphenylpolyethylenoxids sowie 3 Gew.-% ethoxylierter Tridecylalkohol (6 EO) gelöst. Zu dieser wäßrigen Lösung ließ man bei Raumtemperatur unter starkem Rühren mit einem Flügelrührer die o.g. organische Phase fließen und rührte die enstandene weiße Emulsion noch ca. 15 - 20 Minuten nach.

Die Zubereitung war chemisch und anwendungstechnisch stabil.

Beispiel 10

30,8 Gew.-% 2-sec.-butyl-4,6-dinitrophenyl-3-methylcrotonat (Binapacryl) wurden unter Rühren in 15 Gew.-% Xylol gelöst und mit 5 Gew.-% des Triethanolamin-Salzes des phosphorylierten Blockcopolymerisates der obengenannten Formel (II), wobei ein Gemisch der Polymeren mit n = 1 und n = 2 im Verhältnis 1 : 2 eingesetzt wurde, bei denen r = 90 - 120, s = 210 - 240 und t = 50 - 80 bedeuteten.

In 33,2 Gew.-% Wasser wurden 5 Gew.-% des Calciumsalzes einer Phenylsulfonsäure, 4 Gew.-% Fettsäurepolyglykolester (40 EO) gelöst. Danach wurden 7 Gew.-% Ethylenglykol zugesetzt und erneut gerührt. Zu dieser wäßrigen Lösung ließ man bei Raumtemperatur unter starkem Rühren mit einem Flügelrührer die o.g. organische Phase fließen und rührte die entstandene gelbliche Emulsion noch ca. 15 - 20 Minuten nach.

Die Zubereitung war chemisch und anwendungstechnisch stabil.

Beispiel 11

In 45 Gew.-% Wasser wurden 6,0 Gew.-% ethoxyliertes Nonylphenol (6 Aeo), 7 Gew.-% des Kaliumsalzes des phosphorylierten Blockcopolymerisates der obengenannten Formel (II), wobei ein Gemisch der Polymeren mit n = 1 und n = 2 im Verhältnis 2 : 1 eingesetzt wurde, bei denen r = 40 - 60, s = 60 - 90 und t = 30 - 60 bedeuteten, und 10 Gew.-% Glycerin gelöst. Dazu ließ man unter starkem Rühren 32,0 Gew.-% (E)-8-(E)-10-Dodecadienol fließen. Die dabei entstehende weiße Emulsion wurde noch 15 bis 20 Minuten nachgerührt.

Die Zubereitung war chemisch und anwendungstechnisch stabil.

## Ansprüche

1. Pflanzenschutzmittel in Form von wäßrigen Emulsionskonzentraten, die einen oder mehrere flüssige oder gelöste Wirkstoffe enthalten, dadurch gekennzeichnet, daß sie neben Wirkstoff 10-70 Gew.-%

Wasser und als öl- und wasserlösliche Dispergiermittel 0,5-20 Gew.-% Salze von phosphorylierten Block-Copolymerisaten auf der Basis von Propylenoxid und Ethylenoxid der Formel I oder II

$$[H(\underset{\displaystyle CH_3}{\underset{|}{C}}H\text{-}CH_2\text{-}O)_p\text{-}(CH_2\text{-}CH_2\text{-}O)_q]_n\text{-}\overset{\displaystyle O}{\overset{\|}{P}}(OM)_m \qquad (I)$$

$$[H(CH_2\text{-}CH_2\text{-}O)_r\text{-}(\underset{\displaystyle CH_3}{\underset{|}{C}}H\text{-}CH_2\text{-}O)_s\text{-}(CH_2\text{-}CH_2\text{-}O)_t]_n\text{-}\overset{\displaystyle O}{\overset{\|}{P}}(OM)_m \qquad (II)$$

worin

| | |
|---|---|
| p, r und s | unabhängig voneinander eine Zahl zwischen 20 und 300, |
| q und t | unabhängig voneinander eine Zahl zwischen 10 und 300, |
| n und m | unabhängig voneinander 1 oder 2, wobei die Summe n + m 3 sein muß, und |
| M | ein Alkalimetallkation, ein Äquivalent eines Erdalkalimetallkations, Ammonium, Mono-, Di- oder Trialkylammonium oder Mono-, Di- oder Trialkanolammonium |

bedeuten, enthalten.

**2.** Pflanzenschutzmittel gemäß Anspruch 1, dadurch gekennzeichnet, daß sie ein Pestizid, ein Repellent oder ein Pheromon enthalten.

**3.** Pflanzenschutzmittel gemäß Ansprüchen 1 oder 2, dadurch gekennzeichnet, daß sie zusätzliche Dispergiermittel, Emulgatoren, Verdickungsmittel, organische Lösungsmittel oder Di- oder Polyole enthalten.

**4.** Pflanzenschutzmittel gemäß Anspruch 3, dadurch gekennzeichnet, daß sie als Di- oder Polyole $(C_2\text{-}C_5)$-Alkandiole, $(C_3\text{-}C_5)$-Alkantriole, Polyethylenglykole oder Alkylglykole enthalten.

**5.** Pflanzenschutzmittel gemäß Anspruch 4, dadurch gekennzeichnet, daß sie Ethylenglykol, Butandiol oder Glycerin enthalten.

**6.** Pflanzenschutzmittel gemäß einem oder mehreren der Ansprüche 1 bis 5, dadurch gekennzeichnet, daß sie 5-60 Gew.-% Wirkstoff enthalten.

**7.** Pflanzenschutzmittel gemäß einem oder mehreren der Ansprüche 1 bis 6, dadurch gekennzeichnet, daß sie bis zu 50 Gew.-% Di- oder Polyol, bis zu 10 Gew.-% zusätzliche Dispergiermittel, bis zu 15 Gew.-% Emulgatoren, bis zu 10 Gew.-% Verdickungsmittel und bis zu 30 Gew.-% organisches Lösungsmittel enthalten.

**8.** Verwendung von Pflanzenschutzmitteln gemäß einem oder mehreren der Ansprüche 1 bis 7 zur Bekämpfung von Schadorganismen oder Schadpflanzen.

**9.** Verfahren zur Bekämpfung von Schadorganismen oder Schadpflanzen, dadurch gekennzeichnet, daß man auf dieselben oder die Anbauflächen eine wirksame Menge eines Mittels gemäß einem oder mehreren der Ansprüche 1 bis 7 aufbringt.

**10.** Verfahren zur Herstellung der nach einem oder mehreren der Ansprüche 1 bis 7 definierten Pflanzenschutzmittel, dadurch gekennzeichnet, daß die Komponenten gemäß Ansprüchen 1-7 bei Temperaturen zwischen 0° C und 60° C in einer Zone hoher Turbulenz durch Rühren oder Schütteln in Wasser dispergiert werden, bis sich die gewünschte Emulsion gebildet hat.

## Claims

1. A plant protection agent in the form of an aqueous emulsion concentrate which contains one or more liquid or dissolved active ingredients, wherein said agent contains, in addition to the active ingredient, 10-70% by weight of water and, as oil-soluble and water-soluble dispersants, 0.5-20% by weight of salts of phosphorylated block copolymers based on propylene oxide and ethylene oxide of the formula I or II

$$[H(\underset{CH_3}{\underset{|}{C}}H-CH_2-O)_p-(CH_2-CH_2-O)_q]_n-\overset{O}{\overset{\|}{P}}(OM)_m \qquad (I)$$

$$[H(CH_2-CH_2-O)_r-(\underset{CH_3}{\underset{|}{C}}H-CH_2-O)_s-(CH_2-CH_2-O)_t]_n-\overset{O}{\overset{\|}{P}}(OM)_m \qquad (II)$$

where

| | |
|---|---|
| p, r and s | independently of one another are each from 20 to 300, |
| q and t | independently of one another are each from 10 to 300, |
| n and m | independently of one another are each 1 or 2, and the sum n+m must be 3, and |
| M | is an alkali metal cation, one equivalent of an alkaline earth metal cation, ammonium, mono-, di- or trialkylammonium or mono-, di- or trialkanolammonium. |

2. A plant protection agent as claimed in claim 1, which contains a pesticide, a repellent or a pheromone.

3. A plant protection agent as claimed in claims 1 and 2, which contains additional dispersants, emulsifiers, thickeners, organic solvents or diols or polyols.

4. A plant protection agent as claimed in claim 3, which contains, as diols or polyols, ($C_2$-$C_5$)alkanediols, ($C_3$-$C_5$)alkanetriols, polyethylene glycols or alkylglycols.

5. A plant protection agent as claimed in claim 4, which contains ethylene glycol, butanediol or glycerol.

6. A plant protection agent as claimed in one or more of claims 1 to 5, which contains 5-60% by weight of active compound.

7. A plant protection agent as claimed in one or more of claims 1 to 6, which contains up to 50% by weight of a diol or polyol, up to 10% by weight of additional dispersants, up to 15% by weight of emulsifiers, up to 10% by weight of thickeners and up to 30% by weight of organic solvent.

8. Use of a plant protection agent as claimed in one or more of claims 1 to 7 for controlling harmful organisms or weeds.

9. A method of controlling harmful organisms or weeds, wherein an effective amount of an agent as claimed in one or more of claims 1 to 7 is applied onto these or the cultivated areas.

10. A process for preparing the plant protection agent as defined in one or more of claims 1 to 7, wherein the components as claimed in claims 1-7 are dispersed in water at from 0 to 60 °C in a zone of turbulence by stirring or shaking, until the desired emulsion has formed.

## Revendications

1. Produits protecteurs de plantes en concentrés aqueux pour émulsions, contenant une ou plusieurs matières actives liquides ou en solution, produits caractérisés en ce qu'ils comprennent, avec la

matière active, de 10 à 70% en poids d'eau et comme agent dispersant oléosoluble et hydrosoluble de 0,5 à 20% en poids de sels de copolymères séquencés phosphorylés des oxydes de propylène et d'éthylène, de formule I ou II ci-dessous

$$[H(\underset{CH_3}{\underset{|}{CH}}-CH_2-O)_p-(CH_2-CH_2-O)_q]_n-\overset{\overset{O}{\|}}{P}(OM)_m \qquad (I)$$

$$[H(CH_2-CH_2-O)_r-(\underset{CH_3}{\underset{|}{CH}}-CH_2-O)_s-(CH_2-CH_2-O)_t]_n-\overset{\overset{O}{\|}}{P}(OM)_m \qquad (II)$$

formules dans lesquelles :

- p, r et s sont chacun, indépendamment les uns des autres, un nombre de 20 à 300,
- q et t sont chacun, indépendamment l'un de l'autre, un nombre de 10 à 300,
- n et m sont chacun, indépendamment l'un de l'autre, le nombre 1 ou 2, la somme n + m devant être 3, et
- M désigne un cation de métal alcalin, un équivalent de cation alcalino-terreux ou un cation ammonium, mono-, di- ou tri-alkylammonium ou mono-, di- ou tri- alcanolammonium.

**2.** Produits selon la revendication 1, caractérisés en ce qu'ils contiennent un agent pesticide, un agent répulsif ou une phéromone.

**3.** Produits selon la revendication 1 ou 2, caractérisés en ce qu'ils contiennent également des agents dispersants, émulsionnants, épaississants, des solvants organiques ou des diols ou polyols.

**4.** Produits selon la revendication 3, caractérisés en ce qu'ils contiennent comme diols ou polyols des alcanediols en $C_2$-$C_5$, des alcane-triols en $C_3$-$C_5$, des polyéthylène-glycols ou des alkyl-glycols.

**5.** Produits selon la revendication 4, caractérisés en ce qu'ils contiennent de l'éthylène-glycol, du butanediol ou du glycérol.

**6.** Produits selon une ou plusieurs des revendications 1 à 5, caractérisés en ce qu'ils contiennent de 5 à 60% en poids de la matière active.

**7.** Produits selon une une ou plusieurs des revendications 1 à 6, caractérisés en ce qu'ils contiennent jusqu'à 50% en poids d'un diol ou polyol, jusqu'à 10% de dispersants, jusqu'à 15% d'émulsionnants, jusqu'à 10% d'épaississants et jusqu'à 30% d'un solvant organique.

**8.** L'emploi de produits protecteurs de végétaux selon une ou plusieurs des revendications 1 à 7 pour lutter contre des organismes ou plantes nuisibles.

**9.** Procédé de lutte contre des organismes et plantes nuisibles, procédé caractérisé en ce que l'on applique sur ceux-ci ou sur les surfaces qui sont mises en culture des quantités appropriées d'un produit selon une ou plusieurs des revendications 1 à 7.

**10.** Procédé de préparation des produits protecteurs de plantes selon une ou plusieurs des revendications 1 à 7, procédé caractérisé en ce que l'on disperse dans l'eau, par agitation ou secousses, les divers composants selon les revendications 1 à 7, à des températures de 0 à 60 °C, dans une zone à haute

turbulence, jusqu'à ce que l'émulsion voulue se soit formée.